Europäisches Patentamt

European Patent Office

Office européen des brevets

(19)

(11) Publication number: **0 096 939**
A2

(12)

# EUROPEAN PATENT APPLICATION

(21) Application number: 83200858.5

(51) Int. Cl.³: **F 03 D 3/06**

(22) Date of filing: **14.06.83**

(30) Priority: **16.06.82 BE 893865**

(71) Applicant: **Dejaegher, Roger Martin Edmond Boudewijn, Kanaalstraat 27, B-9060 Zelzate (BE)**

(43) Date of publication of application: **28.12.83**
**Bulletin 83/52**

(84) Designated Contracting States: **AT CH DE FR GB IT LI LU NL SE**

(72) Inventor: **Dejaegher, Roger Martin Edmond Boudewijn, Kanaalstraat 27, B-9060 Zelzate (BE)**

(54) **Windmill with mobile paddles & centrifugal effect.**

(57) An oval or round hollow receptacle entirely or partly filled with a liquid or metallic substance which owing to the rotary movement swing outwards thus provoking a centrifugal energy. It is driven by the wind by means of either sails or pot-shaped hollow pipes which can automatically also turn themselves in or out of the wind and entirely automatically create with the liquid a regulation of the field-current of the dynamo and alternator.

ACTORUM AG

Background of yhe Invention.

Standard normal windmills,wind-driven,either
vertically or horizontally,present the following
disadvantage: whenever the wind-force drops down, the
windmill very quickly returns to a fast decreasingly
reduced revolution rate from which no energy may
be obtained.

Consequently this invention aims to provide,in
case of a drop in wind-force,and this thans to the
centrifugal effekt, a centinuation of the rotation
from which energy may still be,for a time,obtained.

Additional purpose and advantages of this invention
will reveal themselves in the description and claims
which follow and are to be taken together with the
appended drawings.

The applicant claims the benefit of the filling
date of his prior foreign patent application,
namely Belgian Patent Application XXXX 4/4422
filed I6 JUNI I982.

## SUMMARY OF INVENTION

It consists of a sort of fan(e.g. horizontally wind-driven) at the center of which is be found an empty sump to which two or more conduits are connected, the other extremities of which termnate in a ladle-like receptacle.The empty sump at the center of the fan is filled with a very heavy liquid such as for example:quick-silver.
The fan shall rotate,since the wind is in no way hindered by the weight present at the center and the latter is thus also spinning round. The speed of the fan increases and the very heavy liquid(of low viscosity) shall swing outwards. As the speed increases so shall the mass and consequently the power.

Presently more energy may be drawn than from a standard wind-mill,the mass is steadily incresed by the speed,the swing-out effect is very high and if the wind force drops down the windmill shall go on rotating thanks to the centrifugal force.

It stand to reason that heavy liquid may also be replaced by heavy metal. In case of overspeeding shall the rotary pots retract from the wind.

This system may also be applied to HELICOPTERS or such like,in fact wherever one may use hollow paddles, prpellors and similar and where very heavy liquid shall provide an increase of the swing-out effect. As aresult one may be able to rduce the demand on the acceleratio control and consequently obtain a considerable ecnomy of fuel.

BRIEF DESCRIPTION OF DRAWINGS

FIG I    is an view XXXX of a type windmill with Liquid for
         cebtrigugal force(horizontally driven 2-sail)

Fig 2    is a side view  of a horizontally driven 2-sail
         windmill; with liquid and electrical contacts.

FIG 3    is a side view o∅f a horizontally driven 3-sail
         windmill,with paddle-arms vertical in standstill
         position  and horizontallypôsition  in rotation.

FIG 4    is a side view  of a practical application,with
         counterweights,paddle-arms en liquid .

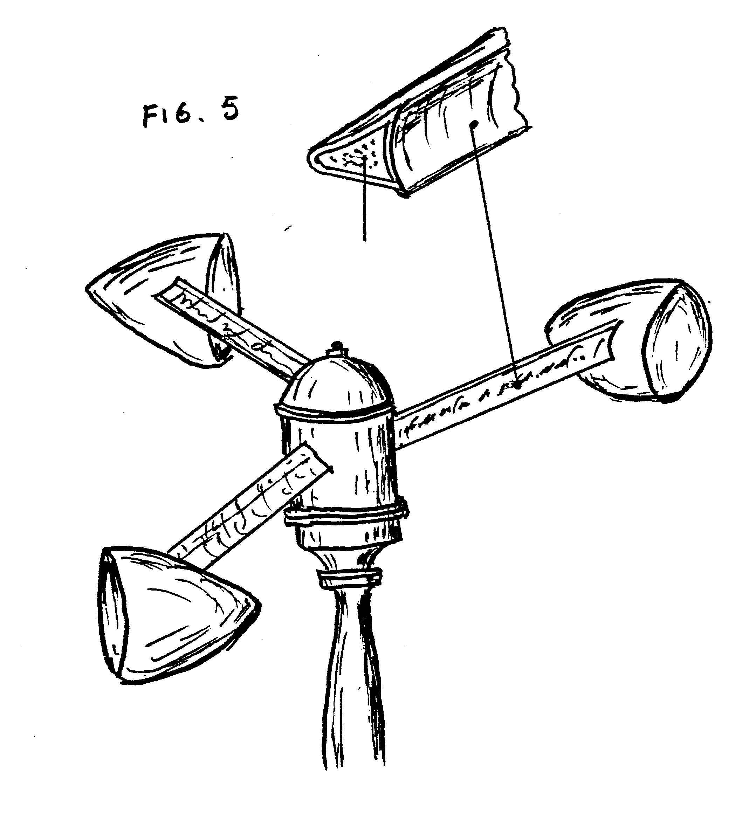

FIG 5    is a view of a practical 3-sails,horizontally
         driven windmill.

FIG 6    is a side view of a very simple constitution,
         horizentally driven with a hollow ovai bowl.

FIG 7    is a view for observe in half of the bowl,with
         the electrical contacts.

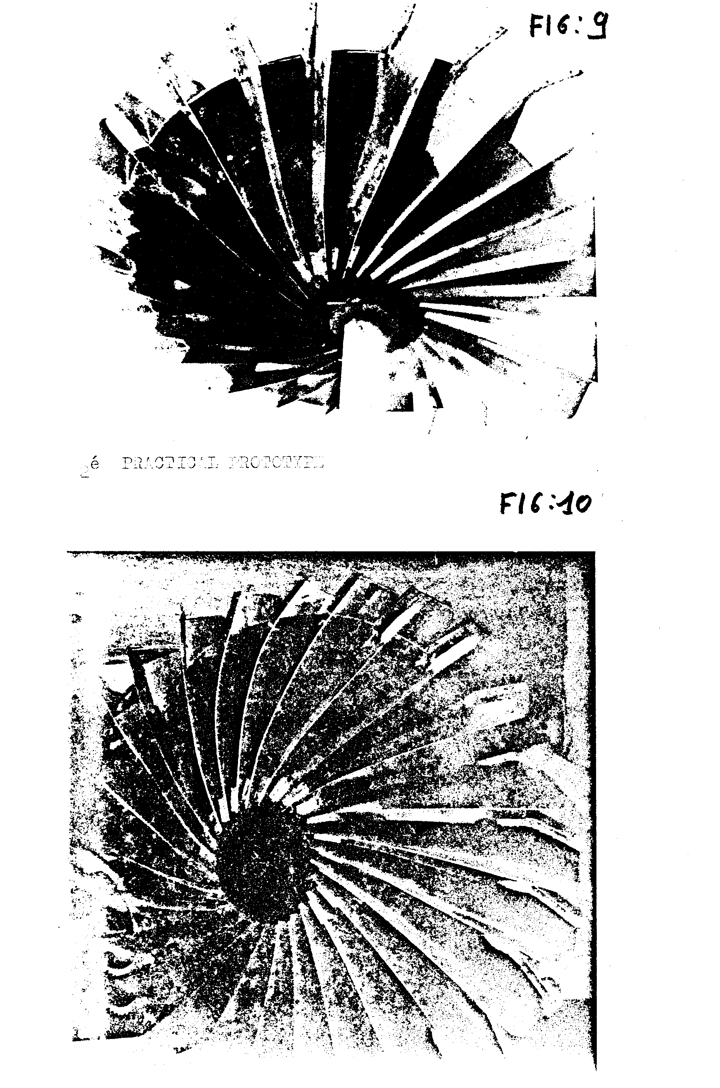

FIG 8    Is a side view of a practical prototype with
         liquid.

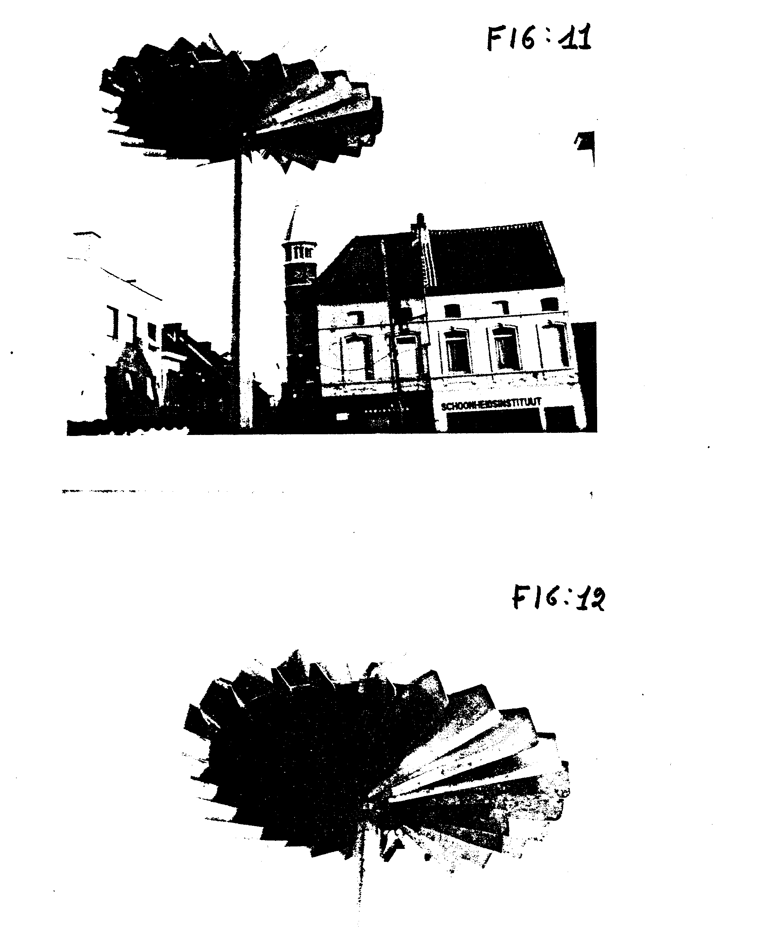

FIG 9    is a bottom view of a other model windmill with
         liquid.

FIG IO is a view of the wind-sails

FIG II is a view of the device.

FIG I2 is a view of the device -practical windmill for the
         marketing (inside the "DOME'S, with liquid).

0096939

## SPECIFIC EXAMPLE OF INVENTION.

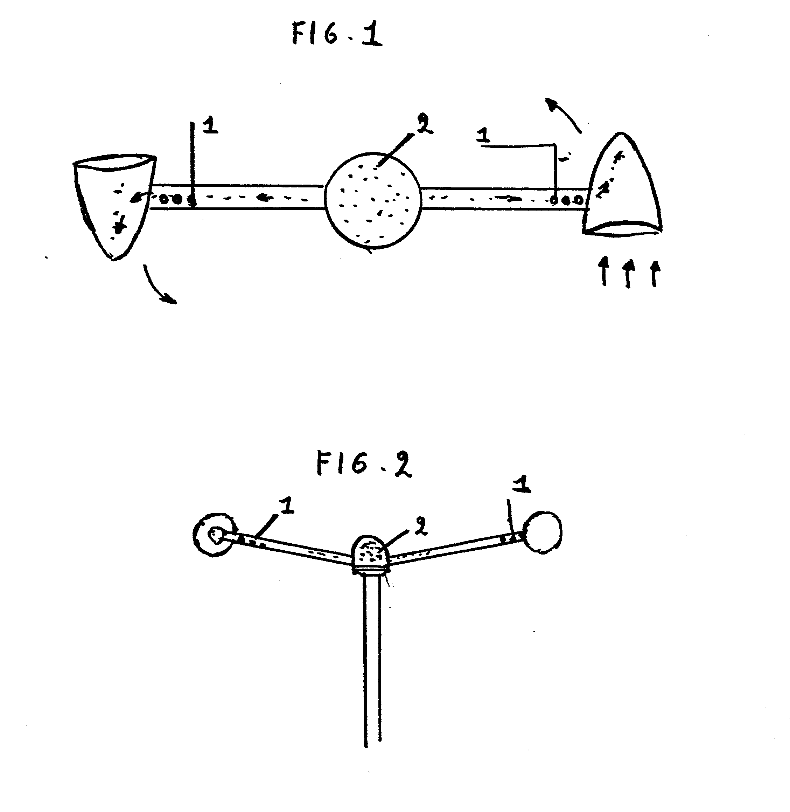

On page I Fig I one may see the princple of the principle of the windmill. We have a horizontally driven
2 -sail windmill.The center is filled with a heavy **(2)**
liquid(fig.2) which swings outwards more and more as
the speed of rotation increases .The higher the speed
,the further the swing-out,until the this loquid comes
in contact,(inthe hollow conduit) with the contact-points **(1)**
whose function is to regulate the fieldcurrent of the
alternator.
The alternator is thus only energized from the moment
that the windmill has reached its operational revolution
rate and some power or energy may be obtained from it.

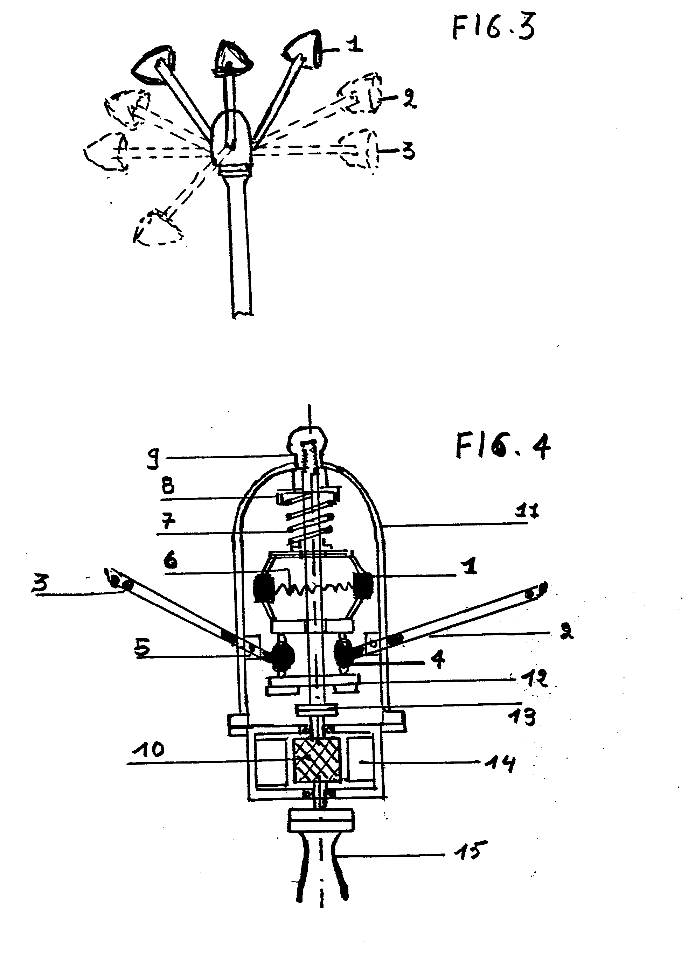

On page III fig.3 one may see the constrution of a wind-
mill with ascending or descending paddles,provision which
gives as advantage that in the arrested position the
paddles are certical **(1)**and are able to reach extremely
quickly a high revolution rate( with the paddles hori-
zontally**2**spread-out this process is much alower to reach
the appropriate rotation rate) **(3)**

From the moment the windmill has reached a certain revolution speed,the centrifugal couterweights(I) in the
windmill shall swing outwards and give to the paddle-
arms(2) the required power to provoke their drscent.At
that moment the heavy liquid shall start swinging outwards, bringing about a shock effect and the speed of the
spead-out paddles shall increase, the mass shall enlarge
and at the same time the electric points(3)  on the paddles shall be brought in contact with the liquid and the
alternator shall be mre and more energized following the
revolution rate of the windmill.

On fig 4. one may see a practical application of such
a windmill designed on this gyrosopic effect. As the
conterweights(I) swing out the paddle reservoir (4) rise
and through the turning point(5) the extremity of the
paddle-arm (2) is able to descend and the liquid may thus
flow and swing outwards.

In standstill position or weak wind-force the conterweights shall be retracted by spring (6) , the paddle reservoir are pushed downwards and thus the rotation bowls of the paddle-arms shall return to a vertical position in which the slighest breeze may once again activate the paddle-arms and bring them back to an adequate revolution rate.
It is also possible to turn the paddle-arm about so that they may no longer be activated by wind so as to prevent any dahger of "OVERSPEED".

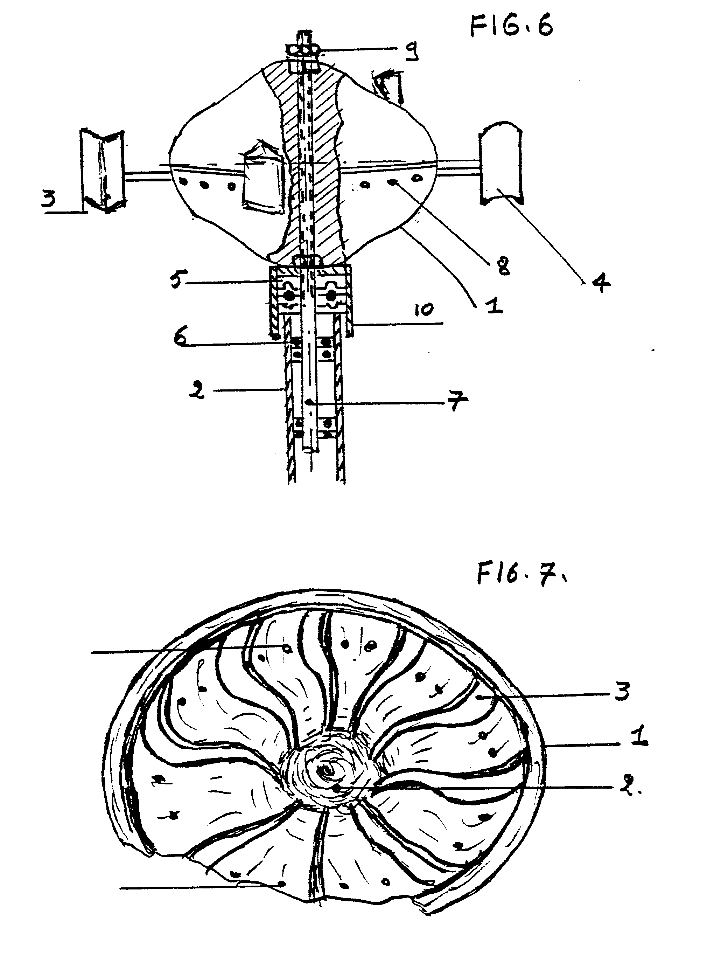

On fig 6.the very simple constitution of the elements consisting of a hollow oval bowl(I),fixed on a mast(2),driven by the wind by means of the paddles (3-4) wich collect the circulan forces through the ball-bearings(5--6) centered on the spindle (7).

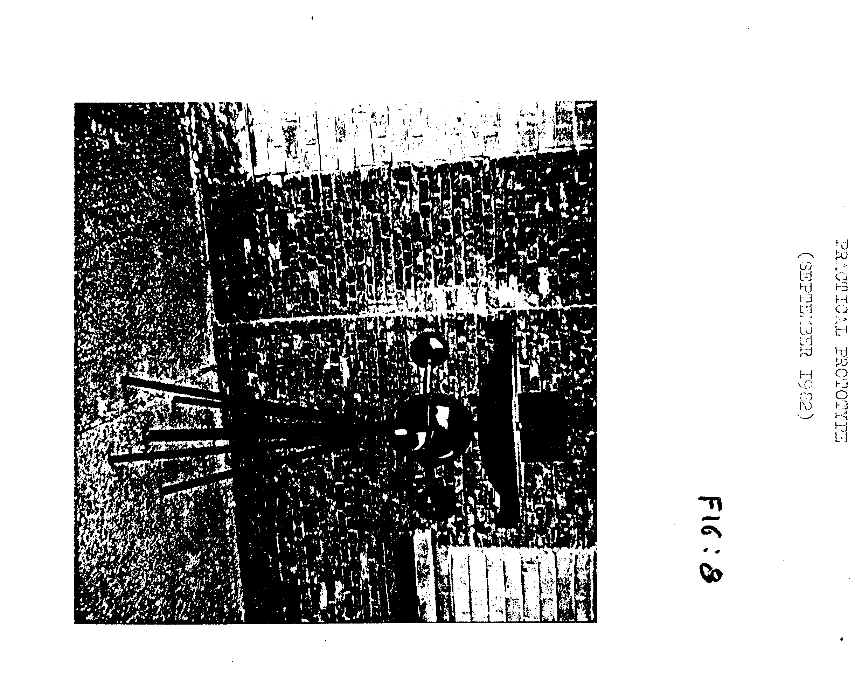

In the hollow oval bowl some oil,for example ,is introduced. This oil shall swing outwards during the rotation yet when there is a drop in the wind force shall it remain for some still in rotation.On fig 7.one may observe in half of the bowl (I) the blades(3) and in the middle a liquid (2).

As soon as this liquid start its outwards swinging movement the blades shall provoke a contact of the contact points(4) which regulate the field- current of the dynamo-or alternator.

6

0096939

## CⒸLAIMS

I      An oval or rouhd hollow receptacle entirely or party filled with a liquid.

2      One or more hollow pipes entirely or partly filled with a liquid or metallic substance or non-ferrous metals which allow or lend themselves easüly to be swing outwards.

3      Hollow pipes partially filled with lüquid or metallic substances and which in the absence of wind and stoppage of the windmill are able to rise and place themselves vertically so that the slightest breeze may easily provoke a rotative motion.

4      Mobile hollow pipes or conduits filled either entirely or partly with either a liquid or a metal, from the moment that a wind energy is present this liquid or metal shall swing outwards and the pipes or conduits shall be forced downwards and consequently begin to rotate horizontally thus furtherincreasing the centrifugal effect.

5      Eectric contacts may be fixed to the hollow pipes or conduits,once contact is made with the liquid or metallic substance the field-current of the alternator may be regulated(centrifugal effect of the liquid or metallic substance).

6      A hollow receptacle either round or oval shaped (e.g. 2 domes in juxtaposition) with in which a liquid is introduced. This hollow receptacle is allowed to rotate by windforce provided by sails,the liquiq may swing thus outwards against the leading scoops in the hollow receptacle.

7 Electric contacts are fixed in the hollow recep-
tacle,from the moment the liquid swing butwards, these
contacts automatically short-cicuit one or several
electric connections, in keeping with the centrifugal
force and thus energize the field-current of the
alternator.

8 The creation of centrifugal force within the
boy of the windmill and the utilization  of this
energy in case of a drop in the wind-force.

9 The creation of a centrifugal energy in the wind-
mill,energy which reveals itself to be much XXaXX higher
than could be derivedsolely from simple wind-force,and
this by means of a container or receptacle filled with
liquid or metal which swing outwards during the
rotation of the windmill.

FIG.1

FIG.2

0096939

FIG. 3

FIG. 4

0096939

FIG. 5

FIG.6

FIG.7.

0096939

0096939

PRACTICAL PROTOTYPE

(SEPTEMBER 1982)

FIG : 8

0096939

FIG: 9

é PRACTICAL PROTOTYPE

FIG: 10

FIG: 11

FIG: 12